# EUROPEAN PATENT SPECIFICATION

(11) **EP 0 623 817 B1**
(45) Date of publication and mention of the grant of the patent: **13.01.1999**
(21) Application number: 93117722.4
(22) Date of filing: 02.11.1993
(51) Int. Cl.: G01N 23/207, H01J 27/20

(54) **Local analysis of a specimen in an x-ray fluorescence spectrometer**
Ortsaufgelöste Analyse einer Probe mittels eines Röntgenfluoreszenzspektrometers
Examen avec résolution spatiale d'un échantillon dans un spectomètre de fluorescence aux rayons X

(30) Priority: 23.04.1993 JP 97744/93; 12.05.1993 JP 24520/93 U
(43) Date of publication of application: 09.11.1994
(73) Proprietor: SHIMADZU CORPORATION, Nakagyo-ku, Kyoto 604 (JP)
(72) Inventor: Kuwabara, Shoji, c/o Shimadzu Corp. Sanjo Kojo, Kyoto 604 (JP); Yoshioka, Masakazu, c/o Shimadzu Corp. Sanjo Kojo, Kyoto 604 (JP); Ito, Tatsuru, c/o Shimadzu Corp. Sanjo Kojo, Kyoto 604 (JP)
(74) Representative: TER MEER STEINMEISTER & PARTNER GbR

(56) References cited:
- EP-A- 0 527 536
- DE-A- 2 542 350
- DE-A- 3 524 379
- GB-A- 2 057 119
- US-A- 4 162 528
- REVIEW OF SCIENTIFIC INSTRUMENTS, JAN. 1990, USA, VOL. 61, NR. 1, PT.1, PAGES 121 - 123, ISSN 0034-6748 Schumacher U et al 'Local crystal lattice curvature measurements for bent-crystal spectrometers'
- PATENT ABSTRACTS OF JAPAN vol. 006, no. 141 (P-131) 30 July 1982 & JP-A-57 064 155 (RIGAKU DENKI KOGYO) 19 April 1982
- DATABASE WPI Section EI, Week 8239, Derwent Publications Ltd., London, GB; Class S02, AN 82-M9162E & SU-A-886 028 (ZOLOTYKH I Z) 30 November 1981

## Description

### BACKGROUND OF THE INVENTION

### Field of the Invention

The present invention relates to an X-ray fluorescence spectrometer based on a beam-collimating method and, more particularly to an X-ray fluorescence spectrometer suitable for use with local analysis of a specimen.

### Description of Related Art

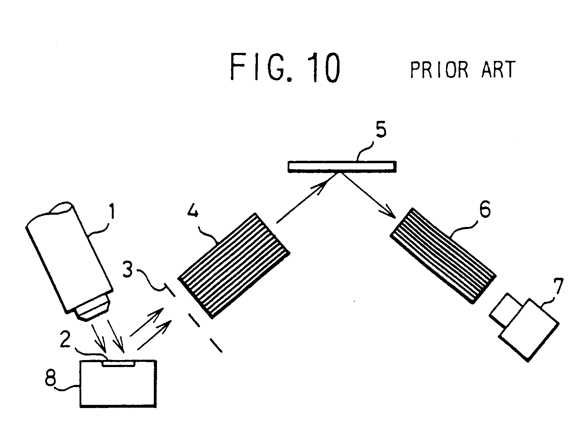

As explained with reference to FIG. 10, in an X-ray fluorescence spectrometer based on a beam-collimating method, a specimen 2 is housed in a specimen container 8. At the center position of the specimen container 8, only a local portion, which is a specially selected part out of the whole surface of the specimen 2 for local analysis, is exteriorly exposed from the specimen container 8.

The primary X-rays from an X-ray tube 1 irradiates the specimen 2, housed as mentioned above in the specimen container 8, with the local portion thereof exposed at the center position of the specimen container 8. The specimen 2 generates fluorescent X-rays from the local portion in response to the irradiation of the primary X-rays from the X-ray tube 1. The fluorescent X-rays, generated from the local portion of the specimen 2, are guided through a view-restricting diaphragm 3 to a primary Soller slit 4. The primary Soller slit 4 collimates the fluorescent X-rays guided through the view-restricting diaphragm 3 and then guides the same to a plate analyzing crystal 5.

The plate analyzing crystal 5 disperses the fluorescent X-rays guided from the primary Soller slit 4 into spectrum having the components of wavelength corresponding to each of the elements contained in the specimen 2 and thereafter leads them into a secondary Soller slit 6. The secondary Soller slit 6 collimates the dispersed fluorescent X-rays from the plate analyzing crystal 5 and thereafter leads them to an X-ray detector 7. The X-ray detector 7 detects each of the elements contained in the local portion of the specimen 2 based on the dispersed fluorescent X-rays having the components of wavelength corresponding to each of the elements guided.

With the above arrangement, it is difficult to irradiate only the specimen 2 with the primary X-rays from the X-ray tube 1; therefore part of the primary X-rays may irradiate the specimen container 8. As a result, such irradiation of the primary X-rays causes not only the generation of fluorescent X-rays from the the local portion of the specimen 2 but also the generation of fluorescent X-rays and scattered X-rays from the specimen container 8.

When the fluorescent X-rays and scattered X-rays, generated from the specimen container 8 other than the local portion to be analyzed, are incident through the abovementioned paths including the primary Soller slit 4 upon the X-ray detector 7, these X-rays form backgrounds against spectrum of the fluorescent X-rays necessary for the analysis of the local portion of the specimen 2, thereby deteriorating a signal-to-noise ratio (S/N) of the X-ray detector 7.

Therefore, with a view to allowing the fluorescent X-rays necessary for analysis from the specimen 2 to be incident on the primary Soller slit 4 and not allowing the unrequired X-rays from the specimen container 8 to be incident on the same for the improvement of the S/N of the X-ray detector 7, the view-resricting diaphragm 3, which restricts a field of view seen from the primary Soller slit 4 only to the local portion of the specimen 2, is interposed between the specimen 2 and the primary Soller slit 4.

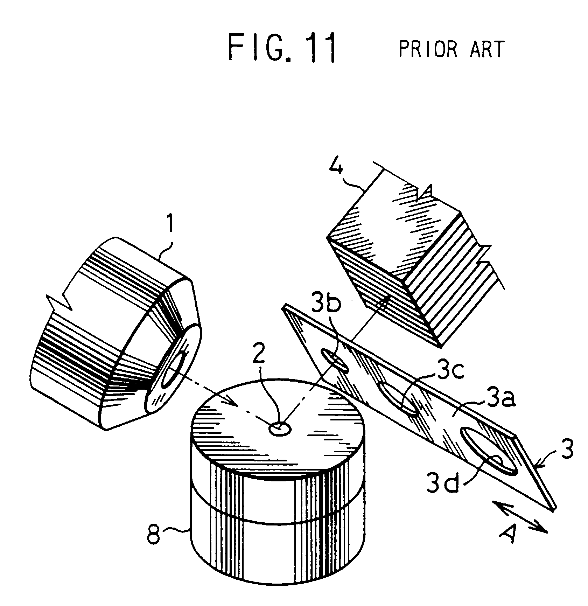

Referring now to FIG. 11, illustrating an enlarged essential part of the spectrometer shown in FIG. 10, the specimen 2 is retained in the specimen container 8 with its circumferential portion covered and only the local portion exposed exteriorly. The view-resricting diaphragm 3 is composed of a flat plate 3a having a plurality of holes, for example, three holes 3b, 3c and 3d each having aperture corresponding to the size of each of the local portions of the specimen 2 to be analyzed. When the local portions of the specimen 2 to be analyzed are each different in size, the view-resricting diaphragm 3 is slidable in a direction marked by an arrow A so that each of the holes 3b, 3c, and 3d of the view-restricting diaphradm 3 may correspondingly be positioned at the center position of the specimen container 8.

In the analysis of the local portions of the specimen 2, when the the local portions are different in size as mentioned above, it is necessary to slide the view-resricting diaphragm 3 so that these holes 3b, 3c, and 3d each may be correspondingly positioned at the center of the specimen container 8 or the local portions of the specimen 2.

In an analysis under the condition that the local portions of the specimen 2 each are positioned differently but the same in size, it is unnecessary to slide the view-resricting diaphragm 3. However, in such an analysis, it is required to rearrange the setting of the specimen 2 to the specimen container 8 so that each of the local portions of the specimen 2 being at different positions each may be positioned precisely at the center position of the specimen container 8. Moreover, when the shape of the specimen 2 does not agree with the specified accommodation size of the specimen container 8, for example, when the size of the specimen 2 is larger than the specified size of the specimen container 8, the specimen 2 cannot be accommodated smoothly in the specimen container 8 as it stands in size.

In such a case, therefore, the specimen 2 is required to be set in the specimen container 8 after subdividing it into smaller parts. Such an analysis for which this setting is required, is very troublesome.

Furthermore, in conducting the analysis in the state that the area of the specimen 2 exposed from the specimen container 8 is made larger and thus the local portions of the specimen 2 for analysis are enlarged, a necessary movement distance of the specimen 2 or the specimen container 8 for analyzing a different local portion is forced to become longer. This brings on an undesirable result that the necessary space for the movement of the specimen container 8 is not satisfactorily ensured due to the restriction for the arrangement of various internal components such as an X-ray tube arranged close to the specimen container 8. In addition to this inconvenience, if the arrangement condition for the internal components is ignored in order to ensure the space, this deteriorates the detection sensitivity of the X-ray detector 7.

DE-A-3524 379 discloses an X-ray flourescence spectrometer according to the preamble of claim 1, in which movement means are provided for moving the view restricting diaphragm into and out of the optical path of the X-rays.

### SUMMARY THE INVENTION

It is a primary object of the present invention to provide a novel and improved X-ray fluorescence spectrometer which facilitates an analysis operation for a specimen in analyzing different local portions thereof.

Another object of the present invention is to provide a novel and improved X-ray fluorescence spectrometer which facilitates the arrangement of internal components by enabling to analyze arbitrary local portions of the specimen without moving the specimen or a specimen container, and improves a detection sensitivity of an X-ray detector.

Other objects and further scope of applicability of the present invention will become apparant from the detailed description given hereinafter. It should be understood, however, that the detailed description and specific examples, while indicating preferred embodiments of the invention, are given by way of illustration only, since various changes and modifications within the spirit and scope of the invention will become apparant to those skilled in the art from this detailed description.

In order to achieve these objects, in carrying out the present invention in one preferred mode, an X-ray fluorescence spectrometer comprises a view-restricting diaphragm for ristricting a field of view to the local portion of a specimen irradiated by X-rays from an X-ray tube, a primary Soller slit for collimating fluorescent X-rays ingoing from the specimen through the view-restricting diaphragm, movement means for moving the view-restricting diaphragm through an arbitrary distance within a predetermined range in a direction perpendicular to an incident optical axis of the primary Soller slit and along a radial direction around the rotation center of the specimen, and control means for controlling the movement means so that the view-restricting diaphragm may face the local portion of said specimen when this local portion is offset from the center of the specimen.

Preferably the present invention comprises rotation means for rotaing the specimen at arbitrary angles around a predetermined rotation axis, the control means controlling the rotation means together with the movement means so that the view-restricting diaphragm may face the local portions of the specimen.

In the present invention, preferably, the view-restricting diaphragm has a plurality of holes each having an aperture of different size and coned cylindrical members each being correspondingly mounted around each of the holes toward the specimen.

Furthermore, preferably the present invention comprises a mark attached to the side of the specimen container for setting a rotation reference position and mark-detecting means for detecting the mark and outputting a signal corresponding to the detection of the mark.

With the above arrangement, the specimen can be rotated through the arbitrary angles and the view-restricting diaphragm can be moved through the arbitrary distance within the predermined range. Accordingly, even though a local portion of the specimen to be analyzed is minute and positioned out of the center of the specimen, for example, the minute local portion of the specimen can face the view-restricting diaphragm by rotating the specimen and moving the view-restricting diaphragm.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
FIG. 1 is an entire schematic representation of an X-ray fluorescence spectrometer according to a first preferred embodiment of the present invention;
FIG. 2 is an enlarged perspective view of an essential part of the spectrometer shown in FIG. 1;
FIG. 3 is an enlarged perspective view of an essential part of an X-ray fluorescence spectrometer according to a second preferred embodiment of the present invention in which a specimen is accommodated with the local portions thereof exposed widely to a specimen container;
FIG. 4 is an enlarged perspective view of an essential part of the spectrometer in which a specimen is accommodated with the local portions thereof exposed narrowly in the second embodiment of the present invention;
FIG. 5 is an enlarged sectional side elevation view of an essential part of the spectrometer shown in FIG. 4;
FIG. 6 is an entire schematic representation of an X-ray fluorescence spectrometer according to a third preferred embodiment of the present invention;
FIG. 7 is an enlarged perspective view of the specimen container shown in FIG. 6;
FIG. 8 is an enlarged vertical sectional view of the specimen container shown in FIG. 7;
FIGS. 9 (a) and (b) are enlarged plan views of a lid of the specimen container and an optical fiber of a mark-detecting unit shown in FIG. 6;
FIG. 10 is an entire schematic representation of a conventional X-ray fluorescence spectrometer; and
FIG. 11 is an enlarged perspective view of an essential part of the spectrometer shown in FIG. 10.

### DETAILED DESCRIPTION OF THE PREFERRED EMBODIMENTS

The present invention will be described in detail with reference to the accompanying drawings.

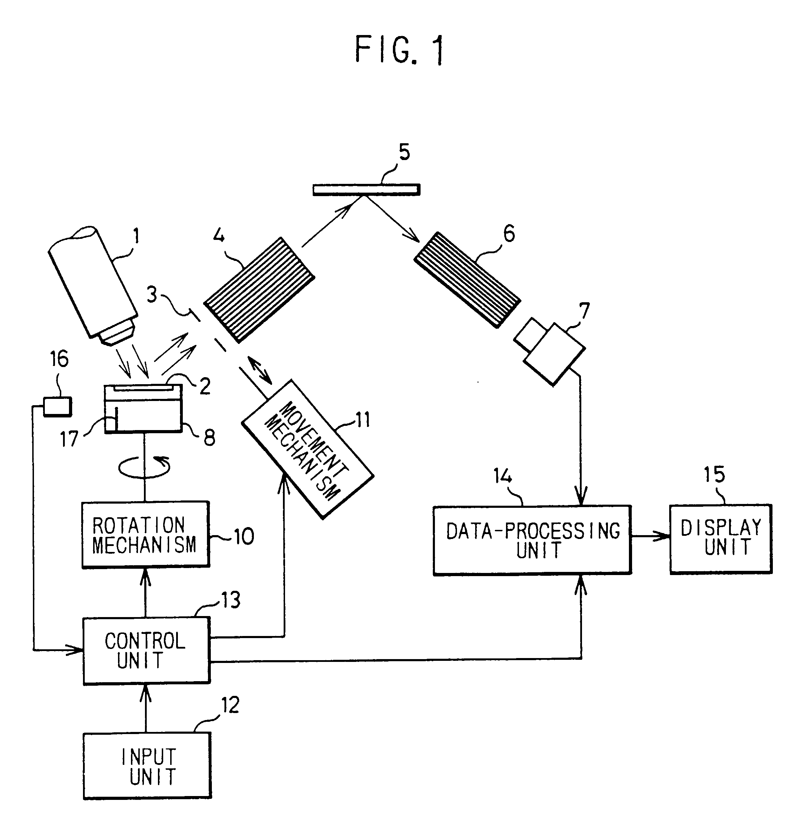

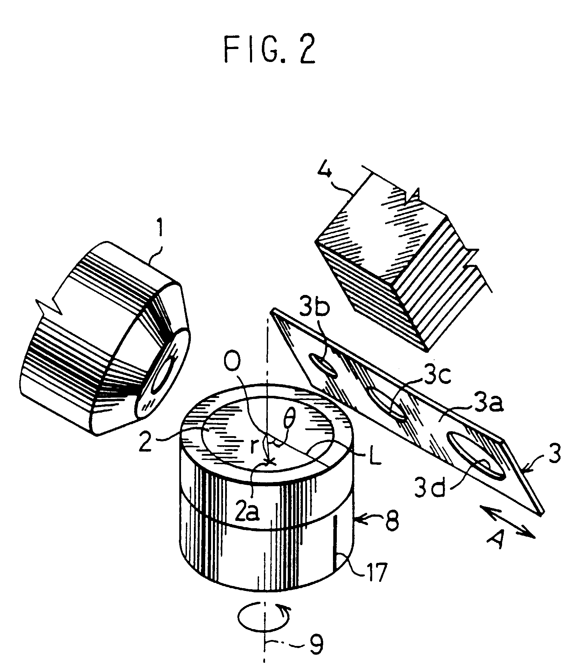

FIG. 1 is an entire schematic representation of an X-ray fluorescence spectrometer according to a first preferred embodiment of the present invention, and FIG. 2 is an enlarged perspective view of an essential part of the spectrometer shown in FIG. 1, wherein like reference numerals referred to in FIGs. 10 and 11 designate like parts.

Referring now to FIGs. 1 and 2, an X-ray fluorescence spectrometer according to the first preferred embodiment of the present invention, basically comprises an X-ray tube 1, a specimen container 8, a view-restricting diaphragm 3, a primary Soller slit 4, a plate analyzing crystal 5, a secondary Soller slit 6, and an X-ray detector 7. The fundamental operation of these components in the spectrometer will be omitted since it has been mentioned above.

In order to enable an easy analysis of arbitrary local portions positioned out of the center of a specimen 2, the spectrometer of the first embodiment of the present invention comprises the following arrangement, in addition to the abovementioned basic one.

The spectrometer of the first embodiment of the present invention comprises a rotation mechanism 10 such as a pulse motor for rotating the specimen container 8 through arbitrary angles around its rotation axis, a movement mechanism 11, composed of a motor, a gear and the like, for moving the view-restricting diaphragm 3 through an arbitrary distance within a predetermined range in a direction perpendicular to an incident optical axis of the primary Soller slit 4 and along a radial direction around the rotation center of the specimen 2, and an input unit 12 such as a keyboard operated for specifying the position of each of the local portions of the specimen to be analyzed.

The spectrometer of the first embodiment of the present invention further comprises a control unit 13 for controlling the rotation mechanism 10 and the movement mechanism 11 so that the view-restricting diaphragm 3 may face the predetermined local portions of the specimen 2, a data-processing unit 14 for making a sensitivity correction accompanied by the fact that the local portion of the specimen 2 has slipped off the center of the specimen and for analyzing and processing necessary data, and a display unit 15 such as a cathode-ray tube (CRT) for displaying the analysis result.

In the first embodiment of the present invention, the surface area of the specimen 2, exposed from the specimen container 8, is wider as compared with that in the conventional spectrometer, and of such widely exposed surface area, an arbitrary minute surface area is selected as a local portion 2a for analysis.

The specimen container 8 is adapted to be rotated through arbitrary angles by means of the rotation mechanism 10. At the reference position of the rotation of the specimen container 8, a mark 17 is set which can be detected by a mark-detecting unit or a photosensor 16 fixedly positioned on the side of the specimen container 8. The view-restricting diaphragm 3 comprises a flat plate 3a having three holes 3b, 3c, and 3d. These holes 3b, 3c, and 3d are each different in aperture so as to correspondingly meet the size of the local portions of the specimen 2 to be analyzed.

The movement mechanism 11 moves the view-restricting diaphragm 3 in a direction perpendicular to the incident optical axis of the Soller slit 4 and in a radial direction, marked by an arrow A in FIG. 2, around the center of the specimen 2.

The movement mechanism 11 also moves the view-restricting diaphragm 3 in the direction of the arrow A so that the holes 3b, 3c, and 3d may face the center of the specimen container 8, stopping the movement of the view-restricting diaphragm 3 at an arbitrary position of the specimen container 8 within a predetermined range.

As a result, even when the local portion of the specimen 2 is positioned out of the center of the specimen container 8, the movement mechanism 11 can move the view-restricting diaphragm 3 at the position where the holes 3b, 3c, and 3d may face the local portion of the specimen 2 thus positioned out of the center of the specimen container 8.

As explained with reference to FIG. 2, the input unit 12 can input, as a position data for determining the position of the local portion 2a, a distance "r" away from the center position of the specimen container 8 or the rotation center O of the specimen 2 and an angle "θ" from the reference position where the mark 17 is set.

When the local portion of the specimen 2 is minute, the control unit 13 controls the rotation mechanism 10 and the movement mechanism 11, on the basis of the position data consisting of the distance "r" and the angle "θ" inputted from the input unit 12, so that out of three holes 3b, 3c and 3d of the view-restricting diaphragm 3, the hole 3b having a minimum aperture corresponding to the minute local portion 2a may face the minute local portion 2a of the specimen 2 specified by the input unit 12.

That is, the control unit 13 rotates the specimen container 8 by controlling the rotation mechanism 10. When the mark 17, formed on the side of the specimen container 8, has opposed the photosensor 16 with the rotation of the specimen container 8, the photosensor 16 detects the mark 17 and then gives its detection output the control unit 13.

The control unit 13 first confirms the reference position of rotation of the specimen container 8 in response to the input of the detection output from the photosensor 16. Next, the control unit 13, in accordance with the reference position thus confirmed and the angle "θ" given from the input unit 12, further controls to rotate the specimen container 8 at the angle "θ" from the reference position, thereby arranging the local portion 2a of the specimen 2 on a straight line where the view-restricting diaphragm 3 faces, or on a straight line L in a movement direction of the view-restricting diaphragm 3.

Next, the control unit 13 moves the view-restricting diaphragm 3 in a plane perpendicular to the incident optical axis of the primary Soller slit 4, namely, in a direction A parallel to the straight line L and along a radial direction round the rotation center O of the specimen 2 so that the hole 3b, having the minimum aperture, may be positioned the distance "r" away from the rotation center O by controlling the movement mechanism 11. Thus, the hole 3b of the minimum aperture of the view-restricting diaphragm 3 is selected and faces the specified local portion 2a of the specimen 2, thereby the analysis of the local portion 2a being conducted.

In this analysis operation, in response to the irradiation of the primary X-rays from the X-ray tube 1 to the specimen 2, the local portion 2a of the specimen 2 generates the fluorescent X-rays. The fluorescent X-rays generated from the local portion 2a are introduced through the view-restricting diaphragm 3 into the primary Soller slit 4 and are then collimated by the primary Soller slit 4. The collimated fluorescent X-rays from the primary Soller slit 4 are dispersed into spectrum having wavelength components by the plate analyzing crystal 5 and then detected via the secondary Soller slit 6 by the X-ray detector 7. The detection output from the X-ray detector 7 is given to the data-processing unit 7.

Since the distance "r", taken between the center position of the specimen container 8 or the rotation center O of the specimen 2 and the local portion 2, varies according to the position of the local portion 2a, the detection sensitivity of the X-ray detector 7 varies depending upon the distance "r", this resulting in the dispersion of the detection output of the X-ray detector 7.

For this reason, the data-processing unit 14 corrects the dispersion of the detection output as follows. That is, a copper plate is utilized as a standard specimen having preselected homogeneous composition, for example. After the copper plate is set in the specimen container 8 in place, the output strength of the X-ray detector 7 is measured at each of the local portions on the copper standard specimen under the condition that the local portions are each positioned at different distances "r" from the rotation center thereof.

In accordance with changes of the positions of the local portions, in other words, when the above distances "r" change, the changes of detection sensitivity of the X-ray detector 7 are pre-measured. After being processed thus, the measured data are pre-stored into the data-processing unit 14 as correction values for compensating the changes of the detection sensitivity.

The data-processing unit 14 corrects the detection sensitivity of the X-ray detector 7 using the stored correction values for detection outout for the analysis of the local portions of the specimen 2 given from the X-ray detector 7. Thus, even though the local portions of the specimen 2, positioned out of the center position thereof, are analyzed and measured, the analysis result can be obtained as precisely as in the case where the analysis is conducted about the local portions at the center position of the specimen 2.

Further, in the first embodiment of the present invention, the local portions of the specimen 2 to be analyzed may be specified at a plurality of the points on the specimen 2 by the input unit 12. In case of such analysis being based on the input of the plural specified points, mapping data indicating an existence probability of elements may be prepared in the data-processing unit 14 and displayed on the display unit 15.

With the preparation and display of the mapping data, compositionally-inhomogeneous specimens or segregation specimens can be suitably analyzed.

In the first embodiment of the present invention, as above, the view-restricting diaphragm 3 can be moved with the rotation of the specimen container 2 at required angles so that the view-restricting diaphragm 3 may face the local portion 2a of the specimen 2 to be analyzed. Accordingly, even in the case where the local portion 2a of the specimen 2 is positioned out of the center position of the specimen 2, it is unnecessary to rearrange the setting of the specimen 2 to the specimen container 8, thereby an easy and smooth analysis operation of the specimen 2 being made possible.

Moreover, since the local portion 2a of the specimen 2 can be set arbitrarily, even though the specimen 2 is heteromorphic or deformed to such an extent that it is difficult to accommodate it in the specimen container 8, the specimen 2 is unnecessary to be subdivided into small parts for its analysis and can be analyzed at the local portions to be analyzed as it stands in size, this resulting in a convenient analysis operation.

Furthermore, in the first embodiment of the present invention, as above, the description has been made about the analysis in the case where the local portion 2a is positioned out of the center position of the specimen 2 and minute in size, though, the local portion can be set at the center position of the specimen 2 for analysis. And, an average result of analysis can be obtained by enlarging the local portion 2a of the specimen 2 to be analyzed and rotating the specimen 2.

In the first embodiment of the present invention, though the position of the local portion 2a is specified with spherical coordinates consisting of the distance "r" and the angle "θ" through the operation of the input unit 12, for example, the local portion 2a can be analyzed in the same manner as above even when it is specified with two-dimensional coordinates and thereafter transformed into spherical coordinates by the control unit 13.

Furthermore, in the first embodiment of the present invention, though the view-restricting diaphragm 3 faces the local portion 2a through the hole 3b of a minimum aperture thereof, other holes 3c and 3d thereof may be selected to face the corresponding local portions.

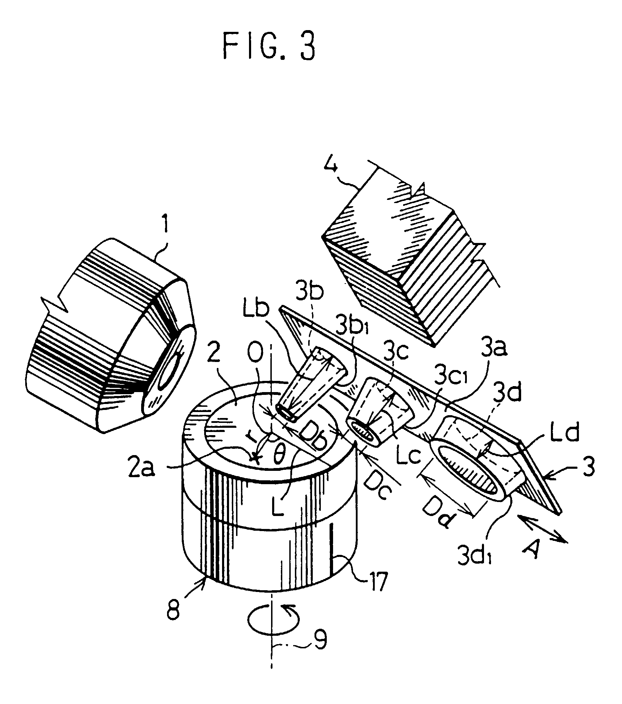

FIG. 3 is an enlarged perspective view of an essential part of an X-ray fluorescence spectrometer according to a second preferred embodiment of the present invention.

Referring to FIG. 3, a view-restricting diaphragm 3 comprises a flat plate 3a having a plurality of holes 3b, 3c and 3d, the plate 3a having a plurality of circular truncated cone-shaped cylindrical members 3b1, 3c1 and 3d1 which are mounted at their base ends correspondingly around the holes 3b, 3c and 3d toward a specimen 2. The aperture of the base ends of the cylindrical members 3b1, 3c1 and 3d1 corresponds to that of each of the holes 3b, 3c and 3d, respectively. The cylindrical members 3b1, 3c1 and 3d1 are formed so that their respective apertures are smaller as they advance toward their respective tip ends. The apertures of their respective tip ends are designated at Db, Dc and Dd in the figure, respectively. Similarly, the lengths of the cylindrical members 3b1, 3c1 and 3d1 are designated at Lb, Lc and Ld, respectively.

When the specimen 2 is seen from the X-ray detector 7 through the cylindrical members 3b1, 3c1 and 3d1, their respective apertures and lengths of the cylindrical members 3b1, 3c1 and 3d1 are set so that, of the whole surface of the specimen 2, the surface other than the analyzed local portion having a required aperture may not be seen and the irradiation path of the primary X-rays from the X-ray tube 1 to the analyzed portion may not be interrupted.

Accordingly, as the local portion 2a of the specimen 2 becomes smaller, the aperture of each of the tip ends of the cylindrical members 3b1, 3c1 and 3d1 is made smaller and the length thereof larger.

Similar to the first embodiment of the present invention, other arrangement of the second embodiment thereof is so constructed that the minimum hole 3b of the view-restricting diaphragm 3 and the corresponding cylindrical member 3b1 may face the specified local portion 2a of the specimen 2 upon analysis operation by means of the rotation mechanism 10 and the movement mechanism 11.

In the second embodiment of the present invention, the local portion 2a of the specimen 2 can be stopped down more than that in the conventional manner for more precise analysis.

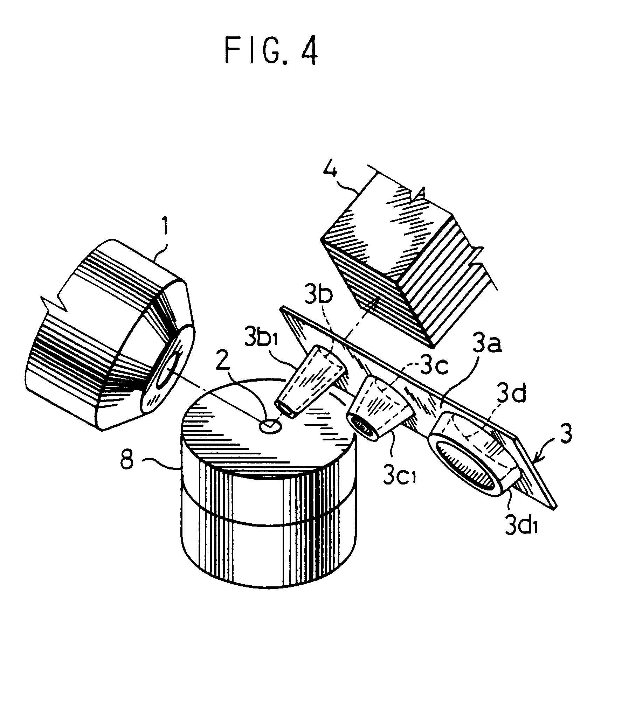

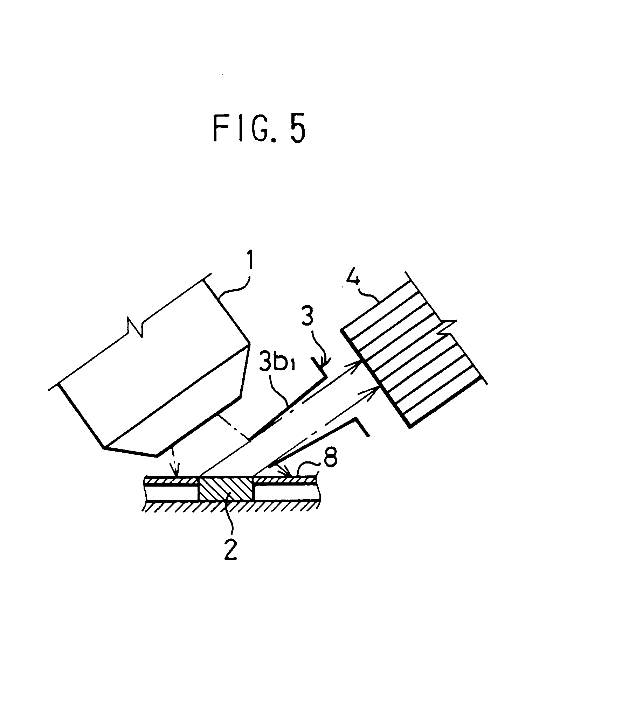

In the second embodiment of the present invention, as shown in FIG. 4, in the case where the specimen 2 is analyzed with only the center surface thereof being exposed and the other surface thereof being covered by means of the specimen container 8, a suitable cylindrical member 3b1, for example, is selected by means of the movement of the view-restricting diaphragm 3 in accordance with the size of the specimen 2. Thus, as shown in FIG. 5, when the specimen 2 is seen from the primary Soller slit 4 through the cylindrical member 3b1, the tip end of the cylindrical member 3b1 comes very close to the specimen 2 and hence only the exposed surface of the specimen 2 can be seen through the cylindrical member 3b1. Accordingly, the unnecessary fluorescent X-rays and scattered X-rays produced from the specimen container 8 other than the specimen 2 are cut off by the view-restricting diaphragm 3, thereby the noise components unnecessary for the local analysis of the specimen 2 being eliminated from the detection output of the X-ray detector 7. In addition to this, in the analysis of the local portions of the specimen 2 as shown in FIG. 4, the aperture of the cylindrical member 3b1 may be approximately the same in size as the specimen 2 and moreover it is unnecessary to diminish its size more than necessary.

With this arrangement, since the fluorescent X-rays generated from the specimen 2 can be introduced efficiently into the X-ray detector 7, the level of the signal components contained in the detection output from the X-ray detector 7 becomes relatively larger than that of the noise components contained in the same, thereby the signal-to-noise ratio (S/N) being improved for analysis of the local portion using the fluorescent X-ray spectrometer as a result.

In the abovementioned embodiments of the present invention, the holes 3b, 3c and 3d of the view-restricting diaphragm 3 and the cylindrical members 3b1, 3c1 and 3d1 are three in number, respectively, but the present invention is not limited to the number any more. Further, the cylindrical members 3b1, 3c1 and 3d1 may be shaped like a straight pipe in addition to a cone.

The spectrometer according to the above embodiments can rotate the specimen 2 at arbitrary angles and move the view-restricting diaphragm 3 through an arbitrary distance within a predetermined range.

Therefore, even though the minute local portions of the specimen 2 to be analyzed are positioned at a distance "r" away from the center of the specimen 2 and at an angle "θ" out of the reference position, the local portions of the specimen 2 can be faced the view-restricting diaphragm 3, by moving the view-restricting diaphragm 3 through the distance "r" by means of the movement mechanism 11 and by rotating the specimen 2 together with the specimen container 8 through the angle "θ" by means of the rotation mechanism 10 in response to the input data from the input unit 12.

For this reason, in the spectrometer according to the present invention, it is unnecessary to rearrange the setting of the specimen 2 as in the conventional manner, thereby a smooth analysis operation being made possible and further the spectrometer can obtain not only average values about elements contained in the specimen 2 but mapping data indicating existence probability.

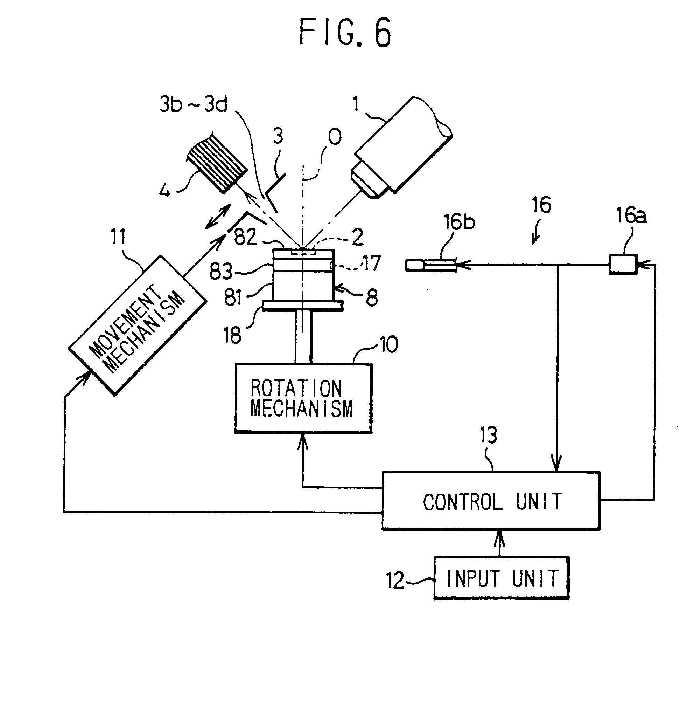

FIG. 6 is a schematic arrangement view of an X-ray fluorescence spectrometer of a third preferred embodiment according to the present invention, wherein parts having basically the same function as the parts shown in FIG. 1 are designated by the like numerals.

Similar to the first embodiment, the X-ray fluorescence spectrometer of the third embodiment of the present invention comprises an X-ray tube 1, a specimen container 8, a view-restricting diaphragm 3, a primary Soller slit 4, a plate analyzing crystal 5, a secondary Soller slit 6, an X-ray detector 7, a rotation mechanism 11, a movement mechanism 11, an input unit 12 and a control unit 12. Of these parts of the spectrometer, the plate analyzing crystal 5, the secondary Soller slit 6 and the X-ray detector 7 are not illustrated in FIG. 6 for easy understanding of its illustration.

The X-ray fluorescence spectrometer of the third embodiment of the present invention further comprises a mark-detecting unit 16 mentioned later, and controls the rotation mechanism 10 and the movement mechanism 11 based on the detection output of the mark-detecting unit 16 and in response to the input from the input unit 12 so that the selected holes of the view-restricting diaphragm 3 may face the the desired local portions of the specimen.

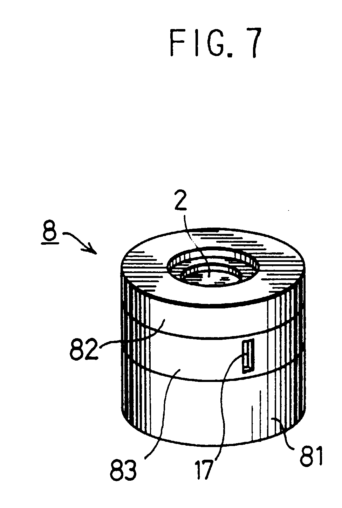

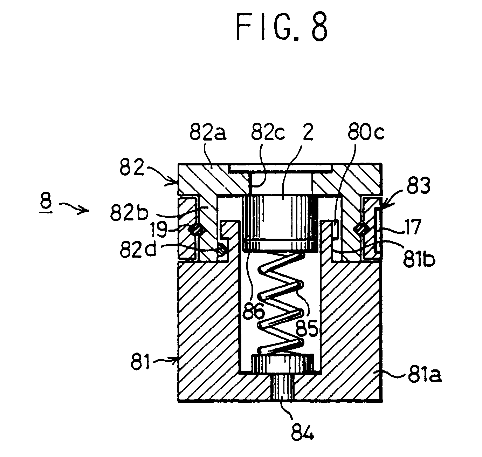

Further, in the X-ray fluorescence spectrometer of the third embodiment of the present invention, the specimen container 8 is mounted on a mounting table 18. As shown in FIGs. 7 and 8, the specimen container 8 comprises a cylindrical container body 81, a lid 82 fitted into the upper portion of the container body 81, and a ring 83 fitted into the barrel of the lid 82.

On the bottom of the container body 81 is clamped a spring seat 84 on which a compressed spring 85 is positioned. A specimen seat 86 is attached on the upper end of the compressed spring 85. The upper portion of the container body 81 is reduced in diameter. An annular groove 81b is formed around the upper peripheral surface of the container body 81 reduced in diameter. The annular groove 81b is circumferentially cut out at several points where grooves 80c for allowing engagement of the lid 82 are formed.

The lid 82 comprises a top portion 82a having an exposing hole 82c at the center thereof and a barrel portion 82b on the inner peripheral surface of which protruding portions 82d are formed corresponding to the grooves 80c for the lid 82. On the outer peripheral surface of the barrel portion 82b of the lid 82, a ring 83 is rotatably fitted through an O-ring 19.

A mark 17 for setting a reference position is attached on one circumferential area of the ring 83. The mark 17 is composed of a slit-like longitudinal groove formed by drilling a circumferential part of the ring 83 and is coated at its inside with black paint. Toward the outside of the ring 83, a mark-detecting unit 16 for detecting the existence of the mark 17 is positioned facing the outer peripheral surface of the ring 83.

The mark-detecting unit 16 is composed of a light source 16a and an optical fiber 16b. The light from the light source 16a irradiates the outer peripheral surface of the ring 83 through the optical fiber 16b and is reflected on the ring 83. The light of reflection from the ring 83 is guided via the optical fiber 16b to the control unit 13. When the mark 17 faces the light-outgoing end of the optical fiber 16b, the strengh of the light of refelection becomes small. In response to this, the mark-detecting unit 16 detects the existence of the mark 17, outputting the detection output to the control unit 13.

The setting of the specimen 2 to the specimen container 8 is conducted as follows. The specimen 2 is mounted on the specimen seat 86. After that, each of the protruding portions 82d is inserted into each of the grooves 80c of the upper portion of the container body 81. Next, by the rotation of the lid 82, each of the protruding portions 82d is fitted into the annular groove 81b and thus the lid 82 is mounted on the container body 81, thereby the specimen 2 being held between the specimen seat 86 and the top portion 82a of the lid 82.

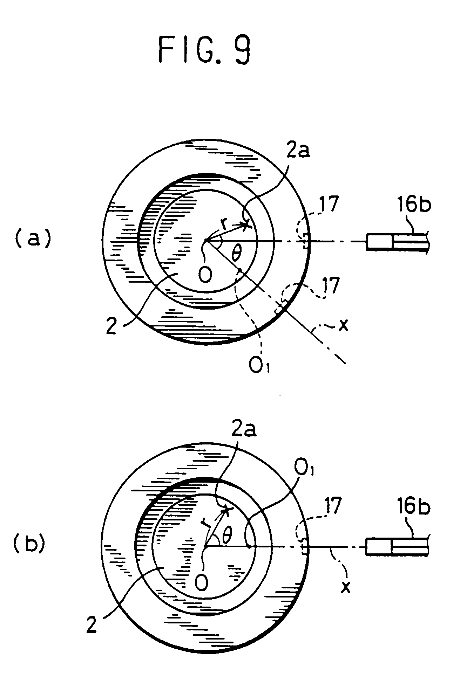

The local analysis of the specimen 2 will be explained with reference to FIG. 9. Two points, consisting of the rotation center O to be the rotation center of the specimen 2 and the angle reference O1 to be the reference of the rotation amount, are set by marking and or the like. The data of the distance "r" between the rotation center O and the analyzed local portion 2a of the specimen 2 reqiured and the rotation angle "θ" to the local portion 2a from the imaginary line x connecting between the points O and O1, are inputted to the control unit 13 by operating the input unit 12.

Thus, the setting of the specimen 2 to the specimen container 8 is completed with the above procedure. Then, when the mark 17 is positioned out of the reference line x connecting between the points O and O1, the mark 17 is conformed with the reference line x by rotating the ring 83 so that the mark 17 may be positioned on the reference line x.

Next, the specimen 8 is mounted on the specimen container 18. Under these circumstances, the rotation center point O , marked on the specimen 2, is adjusted so as to conform with the rotation center of the mounting base 18. Upon this adjustment, the mark 17 is positioned out of the light-outgoing end of the optical fiber 16b as shown in FIG. 9(a).

Next, when the starting order for local analysis is given to the control unit 13 from the input unit 12, the control unit 13 rotates, in response to this order, the specimen container 8, for example, counterclockwise in FIG. 9(a) by driving the rotation mechanism 10 after lighting the light source 16a.

With the rotation of the specimen container 8, as shown in FIG. 9(b), when the mark 17 is positioned toward the light-outgoing end of the optical fiber 16b, the strength of the light of reflection from the mark 17 changes so as to become small. Such a change of the strength of the reflection light from the mark 17 is detected by the control unit 13. At this time, the imaginary line x constituting the reference of the rotation angle of the specimen 2 is conformed with the reference position which the control unit 13 recognizes in order to control the rotation of the specimen container 8. Accordingly, the detection position of the mark 17 is utilized as a reference angle for the analysis of the specimen 2.

The control unit 13 sets the timing of the detection of the mark 17 as a reference angle (= 0) for local analysis, then rotates the specimen container 8, for example, clockwise through the angle "θ" indicating the local portion 2a already data-inputted, and after that, moves the view-restricting diaphragm 3 through the distance "r" by driving the movement mechanism 11. With this control, the holes 3b, 3c and 3d of the view-restricting diaphragm 3 are faced the preset local portion 2a for local analysis.

In the abovementioned third embodiment of the present invention, though the local portion is selected only one area on the specimen 2, in the case where multiple areas on the same specimen 2 are selected, the data concerning the distances "r" and the angles "θ" corresponding to the multiple areas may be inputted into the control unit 13 by operating the input unit 12.

In the case where the mark 17 is mounted and formed on the barrel of the specimen container 8 as in the first and second embodiments of the present invention, it is necessary to make in advance the adjustment for positioning the mark 17 on the imaginary line x connecting between the rotation center O and the angle reference O1 upon setting the specimen 2 in the specimen container 8. However, in the third embodiment of the present invention, it is possible to easily conduct the adjustment by rotating the ring 83 after setting the specimen 2 in the specimen container 8.

In the third embodiment of the present invention, though the ring 83 is fitted around the barrel of the lid 82, it may be fitted into the barrel of the container body 81. Moreover, the mark 17 may be a construction that the linear reflector is mounted on the barrrel of the specimen container 8. In stead of the O-ring 19, a blade spring may be mounted between the lid 82 and the ring 83.

With the abovementioned third embodiment of the present invention, upon analyzing arbitrary local portions of the specimen 2, the setting of the reference position for local analysis is made possible easily. Accordingly, the adjustment time for setting the specimen upon local analysis can be shortened and moreover mapping data can be obtained by the specification of the position of local portion.

While only certain embodiments of the present invention have been described, it will be apparent to those skilled in the art that various changes and modifications may be made therein without departing from the spirit and scope of the present invention as claimed.

## Claims

1. An X-ray fluorescence spectrometer comprising:
a view restricting diaphragm (3) for restricting a field of view to a local portion (2a) of a specimen (2) irradiated by X-rays from an X-ray tube (1);
a primary Soller slit (4) for collimating fluorescent X-rays from the specimen through the view-restricting diaphragm; and
movement means (11) for moving the view-resctricting diaphragm (3) in a plane perpendicular to an incident optical axis of the primary Soller slit (4) along a radial direction around the center (O) of the specimen,
**characterized** in that said movement means (11) is controlled by control means (13) for moving the view-restricting diaphragm (3) through an arbitrary distance within a preditermined range along said radial direction so that the view-restricting diaphragm may face the local portion (2a) of the specimen when this local portion is offset from the center (O) of the specimen.

2. The X-ray fluorescence spectrometer as set forth in claim 1, further comprising rotation means (10) for rotating the specimen (2) through arbitrary angles around a preditermined rotation axis.

3. The X-ray fluorescence spectrometer as set forth in claim 2, wherein the control means (13) controls the movement means (11) together with the rotation means (10) so that the view-restricting diaphragm (3) may face the local portion (2a) of the specimen.

4. The X-ray fluorescence spectrometer as set forth in any of the preceding claims, wherein the view-restricting diaphragm (3) has the hole (3b, 3c, 3a).

5. The X-ray fluorescence spectrometer as set forth in any of the claims 1 to 3, wherein the view-restricting diaphragm (3) has a plurality of holes (3b, 3c, 3d) having apertures of different sizes.

6. The X-ray fluorescence spectrometer as set forth in claim 4 or 5, where-in the view-restricting diaphragm has a cylindrical member (3b1, 3c1, 3d1) mounted around the hole (3b, 3c, 3d) toward the specimen (2).

7. The X-ray fluorescence spectrometer as set forth in claim 6, wherein the cylindrical member (3b1, 3c1, 3d1) is of a cone shape.

8. The X-ray fluorescence spectrometer as set forth in claim 6 or 7, wherein the cylindrical member (3b1, 3c1, 3d1) has a tip end aperture (Db, Dc, Dd) and cylindrical length (Lb, Lc, Ld) corresponding to the size of the local portion (2a) of the specimen.

9. The X-ray fluorescence spectrometer as set forth in any of the claims 5 to 8, wherein the control means (13) moves the view-restricting diaphragm (3) by controlling the movement means (11) so that an arbitrary aperture of the view-restricting diaphragm (3) may face the local portion (2a) of the specimen.

10. The X-ray fluorescence spectrometer as set forth in any of the preceding claims, comprising a specimen container (8) for housing a specimen (2) with the surface thereof exposed.

11. The X-ray fluorescence spectrometer as set forth in claim 10, comprising input means (12) for inputting position data of the local portion (2a) of the specimen to be analyzed, the control means (13) controlling the rotation means (10) to rotate the specimen container (8) in response to the position data inputted from the input means (12) and controlling the movement means (11) to move the view-restricting diaphragm in response to the position data inputted from the input means.

12. The X-ray fluorescence spectrometer as set forth in claim 10 or 11, comprising a mark (17) formed on the side of the specimen container (8) for setting a rotation reference position, and mark-detecting means positioned oppositely to the side of the specimen container for detecting the mark (17), wherein the control means (13) rotates the specimen container (8) by driving the rotation means (10), confirms the rotation reference position in response to the detection input of the mark (17) given from the mark-detecting means (16) with the rotation of the specimen container, rotates the specimen container through a required rotation angle (θ) from the confirmed rotation reference position by driving the rotation means (10) after the confirmation of the rotation reference position, and moves the view-restricting diaphragm by driving the movement means (11) in response to the position data.

13. The X-ray fluorescence spectrometer as set forth in claim 12, further comprising a ring (83) rotatably attached to the side of the specimen container (8), the mark (17) being mounted on the ring (83).

14. The X-ray fluorescence spectrometer as set forth in claim 12 or 13, wherein the mark-detecting means (16) includes a photosensor.

15. The X-ray fluorescence spectrometer as set forth in any of the claims 12 to 14, wherein the mark-detecting means (16) includes a light source (16a) and an optical fiber (16b) connected to the light source.

16. The X-ray fluorescence spectrometer as set forth in any of the preceding claims, further comprising a plate analyzing crystal (15) for dispersing the fluorescent X-rays collimated by the primary Soller slit (4), a secondary Soller slit (6) for collimating the fluorescent X-rays from the plate analyzing crystal, an X-ray detector (7) for detecting the fluorescent X-rays from the secondary Soller slit, and a data processing unit (14) for correcting the sensitivity of the detection output from the X-ray detector (7), the sensitivity of the X-ray detector varying depending upon the changes of the distance of the local portion (2a) of the specimen from the center (O) of the specimen.

17. The X-ray fluorescence spectrometer as set forth in claim 16, wherein, as correction values for the sensitivity of the detection output from the X-ray detector (7), the data processing unit (14) uses the detection output from the X-ray detector corresponding to the changes of the distance from the rotation center of the specimen, the detection output being premeasured on the basis of a standard specimen having homogeneous composition.

## Patentansprüche

1. Röntgenfluoreszenzspektrometer mit:
einer Blende (3) zur Begrenzung eines Gesichtsfeldes auf einen lokalen Teil (2a) einer Probe (2), die mit Röntgenstrahlen aus einer Röntgenröhre (1) bestrahlt wird,
einem primären Sollerspalt (4) zum Kollimieren von Fluoreszenzröntgenstrahlen der Probe durch die Blende und
eine Bewegungseinrichtung (11) zum Bewegen der Blende (3) in einer Ebene senkrecht zur optischen Einfallsachse des primären Sollerspaltes (4) in Radialrichtung in Bezug auf das Zentrum (O) der Probe,
dadurch gekennzeichnet, daß die Bewegungseinrichtung durch eine Steuereinrichtung (13) gesteuert ist, zum Bewegen der Blende (3) über eine beliebige Entfernung innerhalb eines vorgegebenen Bereiches in der Radialrichtung, so daß die Blende dem lokalen Teil (2a) der Probe zugewandt sein kann, wenn dieser lokale Teil gegenüber dem Zentrum (O) der Probe versetzt ist.

2. Röntgenfluoreszenzspektrometer nach Anspruch 1, mit einer Dreheinrichtung (10) zum Drehen der Probe (2) um beliebige Winkel um eine vorgegebene Drehachse.

3. Röntgenfluoreszenzspektrometer nach Anspruch 2, bei dem die Steuereinrichtung (13) die Bewegungseinrichtung (11) zusammen mit der Dreheinrichtung (10) steuert, so daß die Blende (3) dem lokalen Teil (2) der Probe zugewandt sein kann.

4. Röntgenfluoreszenzspektrometer nach einem der vorstehenden Ansprüche, bei dem die Blende (3) ein Loch (3b, 3c, 3a) aufweist.

5. Röntgenfluoreszenzspektrometer nach einem der Ansprüche 1 bis 3, bei dem die Blende mehrere Löcher (3b, 3c, 3d) mit unterschiedlicher Öffnungsweite aufweist.

6. Röntgenfluoreszenzspektrometer nach Anspruch 4 oder 5, bei dem die Blende ein zylindrisches Element (3b1, 3c1, 3d1) aufweist, das in Richtung auf die Probe (2) um das Loch (3b, 3c, 3d) herum montiert ist.

7. Röntgenfluoreszenzspektrometer nach Anspruch 6, bei dem das zylindrische Element (3b1, 3c1, 3d1) kegelförmig ist.

8. Röntgenfluoreszenzspektrometer nach Anspruch 6 oder 7, bei dem das zylindrische Element (3b1, 3c1, 3d1) am freien Ende eine Öffnung (Db, Dc, Dd) und eine Zylinderlänge (Lb, Lc, Ld) entsprechend der Größe des lokalen Teils (2a) der Probe aufweist.

9. Röntgenfluoreszenzspektrometer nach einem der Ansprüche 5 bis 8, bei dem die Steuereinrichtung (13) die Blende (3) dadurch bewegt, daß sie die Bewegungseinrichtung (11) derart steuert, daß eine beliebige Öffnung der Blende (3) dem lokalen Teil (2a) der Probe zugewandt sein kann.

10. Röntgenfluoreszenzspektrometer nach einem der vorstehenden Ansprüche, mit einem Probenbehälter (8) zur Aufnahme einer Probe (2) derart, daß ihre Oberfläche freiliegt.

11. Röntgenfluoreszenzspektrometer nach Anspruch 10, mit einer Eingabeeinrichtung (12) zur Eingabe von Positionsdaten für den lokalen Teil (2a) der zu analysierenden Probe, wobei die Steuereinrichtung (13) die Dreheinrichtung derart steuert, daß sie den Probenbehälter (8) in Abhängigkeit von den über die Eingabeeinrichtung (12) eingegebenen Positionsdaten dreht, und die Bewegungseinrichtung (11) derart steuert, daß sie die Blende in Abhängigkeit von den über die Eingabeeinrichtung eingegebenen Positionsdaten bewegt.

12. Röntgenfluoreszenzspektrometer nach Anspruch 10 oder 11, mit einer auf der Seite des Probenbehälters (8) gebildeten Markierung (7) zur Vorgabe einer Rotations-Bezugsposition. und einer gegenüberliegend zu der Seite des Probenbehälters positionierten Markierungs-Detektoreinrichtung zum Detektieren der Markierung (17), wobei die Steuereinrichtung (13) den Probenbehälter (8) durch Antrieb der Dreheinrichtung (10) dreht, die Rotations-Bezugsposition anhand des von der Markierungs-Detektoreinrichtung (16) bei der Drehung des Probenbehälters gelieferten Detektionssignals für die Markierung (17) feststellt, den Probenbehälter nach der Feststellung der Rotations-Bezugsposition durch Antrieb der Dreheinrichtung (10) um einen geforderten Drehwinkel (θ) aus der festgestellten Bezugsposition verdreht und die Blende durch Antrieb der Bewegungseinrichtung (11) in Abhängigkeit von den Positionsdaten bewegt.

13. Röntgenfluoreszenzspektrometer nach Anspruch 12, mit einem Ring (83), der drehbar an der Seite des Probenbehälters (8) angebracht ist und an dem die Markierung (17) angebracht ist.

14. Röntgenfluoreszenzspektrometer nach Anspruch 12 oder 13, bei dem die Markierungs-Detektoreinrichtung (16) einen Fotosensor aufweist.

15. Röntgenfluoreszenzspektrometer nach einem der Ansprüche 12 bis 14, bei dem die Markierungs-Detektoreinrichtung (16) eine Lichtquelle (16a) und eine an die Lichtquelle angeschlossene optische Faser (16b) aufweist.

16. Röntgenfluoreszenzspektrometer nach einem der vorstehenden Ansprüche, mit einem Platten-Analysekristall (15) zum Dispergieren der von dem primären Sollerspalt (14) kollimierten Röntgenfluoreszenzstrahlen, einem sekundären Sollerspalt (6) zum Kollimieren der vom Platten-Analysekristall kommenden Röntgenfluoreszenzstrahlen, einem Röntgendetektor (7) zum Detektieren der Röntgenfluoreszenzstrahlen vom sekundären Sollerspalt und einer Datenverarbeitungseinheit (14) zum Korrigieren der Sensitivität des vom Röntgendetektor (7) ausgegebenen Detektionssignals, wobei die Sensitivität des Röntgendetektors in Abhängigkeit von Änderungen des Abstands des lokalen Teils (2a) der Probe vom Zentrum (O) der Probe variiert.

17. Röntgenfluoreszenzspektrometer nach Anspruch 16, bei dem die Datenverarbeitungseinheit (14) als Korrekturwerte für die Sensitivität des vom Röntgendetektor (7) ausgegebenen Detektionssignals das vom Röntgendetektor ausgegebene Detektionssignal benutzt. das den Änderungen des Abstands vom Drehzentrum der Probe entspricht. wobei das Detektions-Ausgangssignal vorab auf der Grundlage einer Standard-Probe mit homogener Zusammensetzung gemessen wird.

## Revendications

1. Spectromètre à fluorescence à rayons X comprenant :
un diaphragme restricteur de champ visuel (3) pour restreindre un champ de vision à une partie locale (2a) d'un spécimen (2) irradié par des rayons X venant d'un tube à rayons X (1) ;
une fente de Soller principale (4) pour collimater les rayons X fluorescents venant du spécimen à travers le diaphragme restricteur de champ ; et
des moyens de déplacement (11) pour déplacer le diaphragme restricteur de champ (3) dans un plan perpendiculaire à un axe optique incident de la fente de Soller principale (4) le long d'une direction radiale autour du centre (O) du spécimen,
caractérisé en ce que lesdits moyens de déplacement (11) sont commandés par des moyens de commande (13) pour déplacer le diaphragme restricteur de champ (3) d'une distance arbitraire à l'intérieur d'une plage prédéterminée le long de ladite direction radiale, de telle sorte que le diaphragme restricteur de champ puisse faire face à la partie locale (2a) du spécimen lorsque cette partie locale est décalée du centre (O) du spécimen.

2. Spectromètre à fluorescence à rayons X selon la revendication 1, comprenant de plus des moyens de rotation (10) pour faire tourner le spécimen (2) d'angles arbitraires autour d'un axe de rotation prédéterminé.

3. Spectromètre à fluorescence à rayons X selon la revendication 2, dans lequel les moyens de commande (13) commandent les moyens de déplacement (11) avec les moyens de rotation (10) de telle sorte que le diaphragme restricteur de champ (3) puisse faire face à la partie locale (2a) du spécimen.

4. Spectromètre à fluorescence à rayons X selon l'une quelconque des revendications précédentes, dans lequel le diaphragme restricteur de champ (3) comporte le trou (3b, 3c, 3a).

5. Spectromètre à fluorescence à rayons X selon l'une quelconque des revendications 1 à 3, dans lequel le diaphragme restricteur de champ (3) comporte une pluralité de trous (3b, 3c, 3d) ayant des ouvertures de tailles différentes.

6. Spectromètre à fluorescence à rayons X selon la revendication 4 ou 5, dans lequel le diaphragme restricteur de champ (3) comporte un élément cylindrique (3b1, 3c1, 3d1) monté autour du trou (3b, 3c, 3d) en direction du spécimen (2).

7. Spectromètre à fluorescence à rayons X selon la revendication 6, dans lequel l'élément cylindrique (3b1, 3c1, 3d1) a une forme conique.

8. Spectromètre à fluorescence à rayons X selon la revendication 6 ou 7, dans lequel l'élément cylindrique (3b1, 3c1, 3d1) a une ouverture d'extrémité de pointe (Db, Dc, Dd) et une longueur de cylindre (Lb, Lc, Ld) correspondant à la taille de la partie locale (2a) du spécimen.

9. Spectromètre à fluorescence à rayons X selon l'une quelconque des revendications 5 à 8, dans lequel les moyens de commande (13) déplacent le diaphragme restricteur de champ (3) en commandant les moyens de déplacement (11) de telle sorte qu'une ouverture arbitraire du diaphragme restricteur de champ (3) puisse faire face à la partie locale (2a) du spécimen.

10. Spectromètre à fluorescence à rayons X selon l'une quelconque des revendications précédentes, comprenant un récipient à spécimen (8) pour renfermer un spécimen (2), avec la surface de celui-ci qui est exposée.

11. Spectromètre à fluorescence à rayons X selon la revendication 10, comprenant des moyens d'entrée (12) pour entrer des données de position de la partie locale (2a) du spécimen devant être analysée, les moyens de commande (13) commandant les moyens de rotation (10) de façon à ce qu'ils fassent tourner le récipient à spécimen (8) en réponse aux données de position entrées depuis les moyens d'entrée (12) et commandant les moyens de déplacement (11) de façon à déplacer le diaphragme restricteur de champ en réponse aux données de position entrées à partir des moyens d'entrée.

12. Spectromètre à fluorescence à rayons X selon la revendication 10 ou 11, comprenant un repère (17) formé sur le côté du récipient à spécimen (8) pour établir une position de référence en rotation, et des moyens de détection de repère positionnés à l'opposé du côté du récipient à spécimen pour détecter le repère (17), dans lequel les moyens de commande (13) font tourner le récipient à spécimen (8) en entraînant les moyens de rotation (10), confirment la position de référence en rotation en réponse à l'entrée de détection de la marque (17) donnée par les moyens de détection du repère (16) avec la rotation du récipient à spécimen, font tourner le récipient à spécimen d'un angle de rotation requis (O) à partir de la position de référence en rotation confirmée en entraînant les moyens de rotation (10) après la confirmation de la position de référence en rotation, et déplacent le diaphragme restricteur de champ en entraînant les moyens de déplacement (11) en réponse aux données de position.

13. Spectromètre à fluorescence à rayons X selon la revendication 12, comprenant de plus un anneau (83) fixé de façon à pouvoir tourner au côté du récipient à spécimen (8), le repère (17) étant monté sur l'anneau (83).

14. Spectromètre à fluorescence à rayons X selon la revendication 12 ou 13, dans lequel les moyens de détection de repère (16) comportent un photodétecteur.

15. Spectromètre à fluorescence à rayons X selon l'une quelconque des revendications 12 à 14, dans lequel les moyens de détection de repère (16) comprennent une source de lumière (16a) et une fibre optique (16b) raccordée à la source de lumière.

16. Spectromètre à fluorescence à rayons X selon l'une quelconque des revendications précédentes, comprenant de plus un cristal d'analyse de plaque (15) pour disperser les rayons X fluorescents collimatés par la fente de Soller principale (4), une fente de Soller secondaire (6) pour collimater les rayons X fluorescents venant du cristal d'analyse de plaque, et un détecteur de rayons X (7) pour détecter les rayons X fluorescents venant de la fente de Soller secondaire, et une unité de traitement de données (14) pour corriger la sensibilité de la sortie de détection du détecteur de rayons X (7), la sensibilité du détecteur de rayons X variant en fonction des changements de la distance de la partie locale (2a) du spécimen au centre (O) du spécimen.

17. Spectromètre à fluorescence à rayons X selon la revendication 16, dans lequel, comme valeurs de correction pour la sensibilité de la sortie de détection à partir du détecteur de rayons X (7), l'unité de traitement de données (14) utilise la sortie de détection du détecteur de rayons X correspondant aux changements de la distance à partir du centre de rotation du spécimen, la sortie de détection étant prémesurée en fonction d'un spécimen standard ayant une composition homogène.
